# EUROPEAN PATENT APPLICATION

(11) **EP 3 502 970 A1**
(43) Date of publication of application: **26.06.2019**
(21) Application number: 17209670.3
(22) Date of filing: 21.12.2017
(51) Int. Cl.: G06K 19/073

(54) **RADIO FREQUENCY IDENTIFICATION TAG**

(71) Applicant: Haute ecole du paysage, d'ingenierie et d'architecture de geneve, 1202 Geneve (CH)
(72) Inventor: CORNUT, Julien, 1227 Carouge (CH); BECHEVET, Delphine, 74330 Poisy (FR)
(74) Representative: KATZAROV S.A.

(57) **Abstract**

The present relates to a Radio Frequency Identification device comprising a passive antenna made of a passive conductive part disposed on a substrate, and configured to activated on-demand and a plurality of RFID chips disposed on the substrate, each RFID chip comprising an integrated circuit coupled to the antenna and being capable of communicating if the antenna is in an active state, and incapable of communicating if the antenna is in an inactive state, wherein the passive antenna being designed so as to be disposed along different zones of the substrate, each zone being assigned to a specific RFID chip group such that activation of the antenna in a specific zone generates activation of a specific chip group.

## Description

### Technical Field

The present invention relates to the Radio Frequency technology and more particularly to a Radio Frequency Identification device and even more particularly to a passive, battery-less Radio Frequency Identification tag.

### Background of the art

Known RFID devices feature chips and antennas are used for identification and memory storage purposes. In this regard, known RFID devices may be read-only, write-only, or read-and-write devices. In general, information is transmitted to or from RFID devices through antennas. The information is transmitted at a desired frequency that depends, in part, on the length of the antenna. RFID devices may be employed in many applications.

The term RFID means "Radio-Frequency IDentification." With RFID technology, small electronic tags are programmed with identifying data or other information. RIFD tags are capable of wirelessly providing information using a radio frequency (RF) communication channel. In one example usage, an activation signal such as a gate-opening signal may be stored by an RFID tag to open or close a gate upon activation of the RFID tag. However, there is several different utilizations such as for example RFID tags which can be used instead of bar codes.

Usually, an RF system includes the RFID tag and a reader-writer device. The RFID tag includes a substrate, an RFIC element, such as a chip, an antenna and an energy source. The reader-writer device and the RFID card transmit and receive predetermined information between the antenna of the RFID tag and an antenna of the reader-writer device through a magnetic or electromagnetic field.

As production costs have decreased, RFID tags have become more common. Cheaper RFID tags may become ubiquitous in the coming years for inventory purposes as well as for many other usage scenarios. Consequently, new applications for RFID tags are to be developed where a mere activation/deactivation signal is not sufficient.

One of the main problems of the conventional RFID tags is the need of an energy source as well as the type of signal it sends/receives which can not be complex unless providing complex architecture.

In this regard, a primary object of the invention is to solve the above-mentioned problems and more particularly to provide an RFID tag which is capable of sending complex signal while not needing a large energy source.

### Summary of the invention

The above problems are solved by the present invention.

One of the key elements of the invention is the antenna design. As matter of fact, the frequency at which a passive antenna will be able to process a read signal is highly correlated with the antenna shape. While working on an antenna optimization project the inventors tried to solve the problematics in this technology and the fact that all data stored in an RFID chip connected to an antenna were accessible for everyone provided with an adapted reader. This consideration lead to the findings that any antenna well enough designed could allow a precise shift in its bandwidth by contact on a specific area with any object for which the capacity range is known, like a finger. Such an antenna is unreadable by standard RFID bandwidths, thus increasing the security of the data, the latter accessible only *"On-demand",* that is to say by contact with finger when access is required.

A first aspect of the invention is a radio Frequency Identification device comprising a substrate, a passive antenna disposed on the substrate and configured to activated on-demand, a plurality of RFID chip group disposed on the substrate, each RFID chip group comprising an integrated circuit coupled to the antenna and being capable of communicating if the antenna is in an active state, and incapable of communicating if the antenna is in an inactive state, wherein the passive antenna being designed so as to be disposed along different zones of the substrate, each zone being assigned to a specific RFID chip group such that activation of the antenna in a specific zone generates activation of a specific chip group. Thanks to this it is possible to provide an RFID tag which is capable of sending complex signal while not needing a large energy source.

According to a preferred embodiment of the present invention, the Radio Frequency Identification device is a passive, battery-less RFID tag. This embodiment is particularly adapted for any RFID tag.

Advantageously, the Radio Frequency Identification comprises four RFID chip groups, each group consists in a single chip. In this manner, one can generate complex codes by activating successively each chip.

According to a preferred embodiment of the present invention, the antenna is disposed in four different zones of the substrate, each zone being specific for one RFID chips. This embodiment is particularly adapted for easily handling the RFID tag.

Preferably, the RFID chips are RFID UHF chips. Thus, it can be used with most of the reader devices.

Advantageously, the antenna is designed to be activated on-demand upon contact with a user's pointer. In this manner, it is easy to use.

Preferably, the user's pointer is a finger. Thus, it is simple to use.

According to a preferred embodiment of the present invention, upon activation, each RFID chip is adapted to send a signal specific to the activated chip. This embodiment is particularly adapted for generating complex codes.

Digital Key comprising the Radio Frequency Identification device of the first aspect of the present invention. The particular advantages of this device of the invention being similar to the ones of the method of the first aspect of the invention, they will not be repeated here.

Use of a Digital Key according to the second aspect of the present invention, characterized in that it comprises activating simultaneously or consecutively the RFID chips in order to generate a specific code. The particular advantages of this device of the invention being similar to the ones of the method of the first aspect of the invention, they will not be repeated here.

### Brief description of the drawings

Further particular advantages and features of the invention will become more apparent from the following non-limitative description of at least one embodiment of the invention which will refer to the accompanying drawings, wherein
- Figure 1 represents a front face of a passive, battery-less RFID tag according to an embodiment of the present invention.
- Figure 2 represents a back face of a passive, battery-less RFID tag according to an embodiment of the present invention

### Detailed description of the invention

The present detailed description is intended to illustrate the invention in a non-limitative manner since any feature of an embodiment may be combined with any other feature of a different embodiment in an advantageous manner.

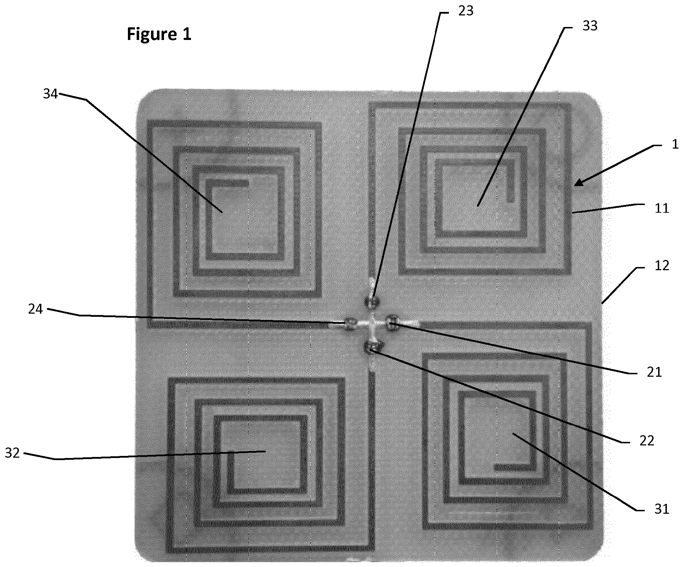

The figure 1 shows the first aspect of the invention which is a Radio Frequency Identification device according to an embodiment of the present invention. The Radio Frequency Identification device of the present invention basically comprises a plurality of RFID chips as well as an antenna.

More particularly, the Radio Frequency Identification device, is a passive, battery-less RFID tag which comprises at least one UHF RFID chip 21, 22, 23, 24 connected to a passive antenna 1 made of a passive conductive part 11 disposed on a substrate 12 and configured to activated on-demand. The antenna is designed such as to be inactive by default and to become active on-demand upon contact with a user's pointer. Here the term user's pointer, or merely the term pointer, means a finger or any capacitive item, which can match antenna's impedance an antenna through direct or indirect contact.

Further, the battery-less RFID tag comprises a plurality of RFID chip groups 21, 22, 23, 24, here four RFID chip group 21, 22, 23, 24 each consisting of a single chip and preferably RFID UHF chips, disposed on the substrate, each RFID chip 21, 22, 23, 24 comprising an integrated circuit coupled to the antenna and being capable of communicating if the antenna 1 is in an active state, and incapable of communicating if the antenna is in an inactive state.

In order to provide the specific activation of each chip independently, the passive antenna is designed so as to be disposed along different zones 31, 32, 33, 34, here four zones, of the substrate, each zone being assigned to a specific RFID chips such that activation of the antenna in a specific zone generates activation of a specific chip. Upon activation, each RFID chip is adapted to send a signal specific to the activated chip.

The tag can therefore be implemented in specific devices such as a digital Key which can be used to generate a specific code or password by activating simultaneously or consecutively the RFID chips 21, 22, 23, 24 because once the antenna is activated by a contact with a pointer, the antenna in turn activates one of the four RFID chips 21, 22, 23, 24. Upon activation of consecutive antenna zones, each activating a specific chip, one can therefore type a code, said code being specific to a RFID reader.

According to the present invention, the antenna is connected to the four chips and is disposed in four distinct zones 31, 32, 33, 34 of the tag, each zone corresponding to a specific chip among the four chips.

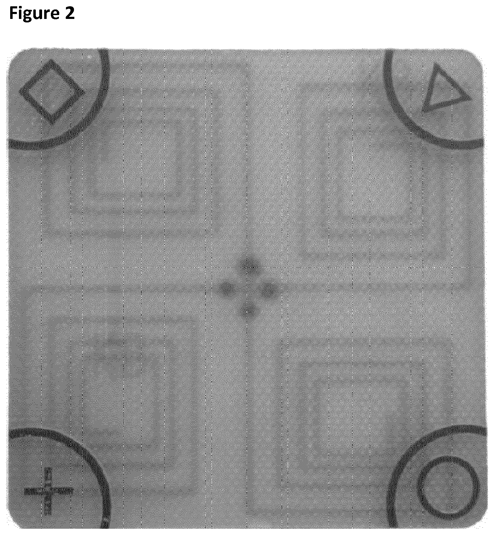

Figure 2 shows passive, battery-less RFID tag according to an embodiment of the present invention where each antenna zone 31, 32, 33, 34 corresponding to a specific chip is indicated by a visual indicator. It is needless to say that the type of indicator is not limiting the present invention. Although a cross, a square, a triangle and a round are represented, we can provide numbers, letters, colors or similar.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different types of substrate, indicators, materials which can be used but also the number of chips and zones.

## Claims

1. Radio Frequency Identification device comprising
a passive antenna (1) made of a passive conductive part (11) disposed on a substrate (12), and configured to activated on-demand, and
a plurality of RFID chip group (21, 22, 23, 24) disposed on the substrate, each RFID chip group comprising an integrated circuit coupled to the antenna and being capable of communicating if the antenna is in an active state, and incapable of communicating if the antenna is in an inactive state, wherein
the passive antenna being designed so as to be disposed along different zones (31, 32, 33, 34) of the substrate, each zone being assigned to a specific RFID chip group such that activation of the antenna in a specific zone generates activation of a specific chip group.

2. Radio Frequency Identification device according to claim 1, **characterized in that** it is a passive, battery-less RFID tag.

3. Radio Frequency Identification device to claim 1 or 2, **characterized in that** it comprises four RFID chip group (21, 22, 23, 24) and each group consists of a single chip.

4. Radio Frequency Identification device according to claim 3, **characterized in that** the antenna (1) is disposed in four different zones (31, 32, 33, 34) of the substrate, each zone being specific for one RFID chip (21, 22, 23, 24).

5. Radio Frequency Identification device according to any one of claims 1 to 4, **characterized in that** the RFID chips are RFID UHF chips (21, 22, 23, 24).

6. Radio Frequency Identification device according to any one of claims 1 to 5, **characterized in that** the antenna (1) is designed to be activated on-demand upon contact with a user's pointer.

7. Radio Frequency Identification device according to any one of claims 1 to 6, **characterized in that** the user's pointer is a finger.

8. Radio Frequency Identification device according to any one of claims 1 to 7, **characterized in that** upon activation, each RFID chip (21, 22, 23, 24) is adapted to send a signal specific to the activated chip.

9. Digital Key comprising the Radio Frequency Identification device of any of claims 1-8.

10. Use of a Digital Key according to claim 9, **characterized in that** it comprises activating simultaneously or consecutively the RFID chips (21, 22, 23, 24) in order to generate a specific code.
